# EUROPÄISCHE PATENTSCHRIFT

(11) **EP 1 886 728 B1**
(45) Veröffentlichungstag und Bekanntmachung des Hinweises auf die Patenterteilung: **20.04.2016**
(21) Anmeldenummer: 07014653.5
(22) Anmeldetag: 26.07.2007
(51) Int. Cl.: B01L 3/02

(54) **Elektronische Dosiervorrichtung zum Dosieren von Flüssigkeiten**
Electronic metering device for metering liquids
Dispositif de dosage électronique destiné au dosage de liquides

(30) Priorität: 09.08.2006 DE 102006037213
(43) Veröffentlichungstag der Anmeldung: 13.02.2008
(60) Teilanmeldung: 10013208.3
(73) Patentinhaber: EPPENDORF AG, 22339 Hamburg (DE)
(72) Erfinder: Molitor, Peter, 24558 Henstedt-Ulzburg (DE); Andres, Karl-Friedrich, 22941 Bargteheide (DE); Schmidt, Peter, 23552 Lübeck (DE)
(74) Vertreter: Hauck Patentanwaltspartnerschaft mbB

(56) Entgegenhaltungen:
- EP-A- 0 864 364
- EP-A2- 0 576 967
- WO-A-94/03222
- WO-A-2005/052781
- WO-A-2005/079989
- WO-A1-00/51738
- WO-A1-00/51739
- DE-A1-102004 038 962
- US-A1- 2002 005 075
- US-A1- 2004 099 067
- US-A1- 2005 255 006
- US-B1- 6 254 832
- BRANDT GMBH + CO KG: "Transferpette electronic" ANNOUNCEMENT BRAND, BRAND, WERTHEIM, DE, 7. Juli 2003 (2003-07-07), Seiten 1-33, XP002337207

## Beschreibung

Die Erfindung bezieht sich auf eine elektronische Dosiervorrichtung zum Dosieren von Flüssigkeiten.

Elektronische Dosiervorrichtungen zum Dosieren von Flüssigkeiten haben einen Antrieb mit einem Elektromotor und eine von diesem Antrieb angetriebene Verdrängereinrichtung, die z.B. einen Zylinder mit einem darin verschieblich angeordneten Kolben umfaßt. Die Verdrängereinrichtung ist z.B. mit einer austauschbaren Pipettenspitze kommunizierend verbunden. Mittels der Verdrängereinrichtung wird ein Luftpolster verlagert, welches Flüssigkeit in die Pipettenspitze einsaugt bzw. daraus ausstößt. Im Unterschied zu diesen Luftpolsterpipetten weisen Direktverdrängerpipetten eine austauschbare Spritze auf, die Flüssigkeit einsaugt bzw. ausstößt. Pipettenspitzen und Spritzen sind bevorzugt Wegwerfartikel für Einmalgebrauch aus Kunststoff.

Stand der Technik sind ferner elektronische Dosiervorrichtungen, bei denen verschiedene Betriebsarten wählbar sind, beispielsweise Pipettieren, Dispensieren und Titrieren. Bei diesen Dosiervorrichtungen können verschiedene Parameter einstellbar sein, beispielsweise das aufzunehmende und abzugebende Flüssigkeitsvolumen beim Pipettieren, das aufzunehmende und die abzugebenden Flüssigkeitsvolumina beim Dispensieren oder Titrieren und die Kolbengeschwindigkeiten bei der Aufnahme und der Abgabe der Flüssigkeit.

Aus US 2004/0099067 A1 ist eine elektronische Pipette bekannt, die den Anwender über ein Display instruiert, wann Flüssigkeit aufzunehmen bzw. abzugeben ist. Daraufhin kann der Anwender den entsprechenden Vorgang mittels einer Starttaste betätigen.

Aus EP 0 864 364 A2 ist eine programmierbare Pipette bekannt, die dem Anwender über ein Symbol im Display die Aufnahmebereitschaft angibt. Die Abgabebereitschaft wird nicht angezeigt.

Aus der Gebrauchsanleitung der "Transferpette electronic" der Brand GmbH & Co. KG ist eine Pipette bekannt, die im Display über ein Pfeilsymbol in den verschiedenen Modi den jeweils folgenden Schritt ankündigt. Die Aufnahme und Abgabe wird über einmaliges Drücken einer Pipettiertaste gestartet.

Aus WO 94/03222 A2 ist ein mechanischer, mit Medikamenten beladbarer Spender zur Verabreichung zweier simultan zu injizierender Medikamente bekannt. Eine mechanische Anzeige zeigt das Erreichen einer maximalen Kolbenauslenkung an.

Die WO 00/51738 A1 beschreibt eine transportable elektronische Pipette mit einem elektrischen Linearantrieb zum Antreiben eines Kolbens in einem Zylinder zum Zwecke des Ansaugens und Ausstoßens von Flüssigkeit in und aus einer Pipettenspitze. Der Linearantrieb wird von einer Batterie gespeist und umfasst einen Schrittmotor mit einem Rotor zum Antreiben des Kolbens. Die Pipette umfasst eine Anzeigeeinrichtung und verschiedene Tasten zum Einstellen von Betriebsweisen und Parametern und zum Steuern des Aufnehmens und Abgebens von Flüssigkeit.

Bekannte elektronische Dosiervorrichtungen haben eine Vielzahl von Bedienelementen, mit denen insbesondere die Betriebsart der Dosiervorrichtung gewählt, die jeweiligen Parameter eingestellt und das Arbeiten der Dosiervorrichtung gesteuert wird. Die Bedienung der bekannten Dosiervorrichtungen ist mühselig. Außerdem ist nachteilig, dass die Steuerung der Abgabe und Aufnahme von Flüssigkeit über einen einzigen Knopf erfolgt, der zum Auslösen bzw. Abstoppen der Kolbenbewegung in vorgegebener Weise betätigt werden muß, so daß die Bedienung elektronischer Dosiervorrichtungen stark von der Bedienung manueller Dosiervorrichtungen abweicht.

Bei der Bedienung kann es zu Fehlern kommen, weil der Anmelder den nächsten sinnvollen Bedienungsschritt nicht erkennt.

Davon ausgehend liegt der Erfindung die Aufgabe zugrunde, eine elektronische Dosiervorrichtung zur Verfügung zu stellen, welche dem Anwender die Bedienung erleichtert.

Die Aufgabe wird durch eine elektronische Dosiervorrichtung gemäß Anspruch 1 gelöst. Vorteilhafte Ausgestaltungen der Dosiervorrichtung sind in den Unteransprüchen angegeben.

Gemäß Anspruch 1 hat eine elektronische Dosiervorrichtung zum Dosieren von Flüssigkeiten:
- ein längliches, handhabbares Gehäuse,
- einen in dem Gehäuse angeordneten Antrieb mit einem Elektromotor,
- mindestens eine in dem Gehäuse angeordnete oder an diesem anordenbare Verdrängereinrichtung mit einem Verdrängerelement, das mit dem Antrieb
- verbunden und/oder verbindbar ist,
- mindestens eine Halteeinrichtung am unteren Ende des Gehäuses zum Halten einer Pipettenspitze oder einer Spritze,
- mindestens eine elektrische Bedieneinrichtung in oder an dem Gehäuse,
- eine in dem Gehäuse angeordnete elektrische Steuereinrichtung, die mit dem Elektromotor, der elektrischen Bedieneinrichtung und der elektrischen Informationseinrichtung verbunden ist und in Abhängigkeit von der Lage und/oder vorangegangenen Änderungen der Lage des Verdrängerelements die Informationseinrichtung zwecks Ausgabe einer Information über die nächste sinnvolle Verlagerung des Verdrängerelements steuert,
- eine elektrische Spannungsversorgung,
- eine elektrische Modustaste und eine elektrische Parametertaste zum Wechseln zwischen verschiedenen Menüs,
- ein Paar nebeneinander angeordneter elektrischer Steuertasten zum Navigieren in den Menüs, Einstellen von Parametern und Steuern der Verlagerung des Verdrängerelements, wobei die beiden Steuertasten des Navigierens in den Menüs, das Einstellen von Parametern und die Verlagerung des Verdrängerelements in verschiedenen Richtungen steuern,
- eine elektrische Anzeigeeinrichtung zum Anzeigen von Menüs und Parametern,
- wobei die elektrische Steuereinrichtung mit der elektrischen Modustaste, der elektrischen Parametertaste, den elektrischen Steuertasten und der elektrischen Anzeigeeinrichtung verbunden ist und die Anzeige von Menüs und Parametern durch die Anzeigeeinrichtung und die Verlagerung des Verdrängerelements entsprechend der Betätigung der Modustaste, der Parametertaste und der Steuertasten steuert.

Bei der erfindungsgemäßen Dosiervorrichtung wird dem Anwender die nächste sinnvolle Verlagerung des Verdrängerelements bzw. der nächste sinnvolle Bedienschritt durch die elektrische Informationseinrichtung angezeigt. Infolgedessen kann der Anwender den nächsten sinnvollen Bedienschritt besser erkennen. Somit wird die Bedienung der Dosiervorrichtung erleichtert und ein fehlerfreies Dosieren gefördert.

Die Verdrängereinrichtung ist z.B. eine Verdrängerkammer mit einer membranartig ausgebildeten Wand, deren Volumen durch Verlagern der Membran änderbar ist. Gemäß einer Ausgestaltung umfaßt die Verdrängereinrichtung einen Zylinder mit einem darin längs verschieblich angeordneten Kolben. Eine im Gehäuse angeordnete Verdrängereinrichtung mit Kolben und Zylinder ist kommunizierend mit der Pipettenspitze verbindbar. Falls die Kolben und Zylinder aufweisende Verdrängereinrichtung am Gehäuse anordenbar ist, ist sie eine Spritze.

Die Halteeinrichtung ist z.B. ein Konus oder Zylinder, auf den eine Pipettenspitze mit einer entsprechenden Öffnung aufpreßbar ist. Gemäß einer anderen Ausgestaltung weist die Halteeinrichtung Greifeinrichtungen zum Greifen eines Flansches an einem Zylinder und eines Bundes an einen Kolben einer Spritze auf, wie sie beispielsweise in der EP 0 656 229 B1 beschrieben sind, deren diesbezügliche Ausführungen durch Bezugnahme in die vorliegende Anmeldung einbezogen sind.

Die Dosiervorrichtung weist eine elektrische Spannungsversorgung zur Versorgung sämtlicher elektrischer Einrichtungen der Dosiervorrichtung auf, insbesondere zur Versorgung des Elektromotors, der Modustaste, der Parametertaste, der Steuertasten, der Anzeigeeinrichtung und der Steuereinrichtung. Die Spannungsversorgung ist z.B. ein Netzteil, mindestens ein Akku (ggfs. mit Ladegerät) oder mindestens eine Batterie.

Die Dosiervorrichtung kann nachträglich mit einer Pipettenspitze oder Spritze versehen werden. Gemäß einer Ausgestaltung umfaßt die Dosiervorrichtung eine Pipettenspitze oder Spritze.

Die Informationseinrichtung kann verschieden ausgestaltet sein. Einbezogen in die Erfindung ist z.B. die Ausführung als akustischer Signalgeber, der beispielsweise in Abhängigkeit von der nächsten sinnvollen Verlagerung des Verdrängerelements verschiedene Töne oder Tonfolgen abgibt oder eine Sprachausgabe ausführt. Einbezogen sind ferner Ausführungen, bei denen die Informationseinrichtung eine elektro-optische Einrichtung umfaßt. Die elektro-optische Einrichtung ist z.B. eine Anzeigeeinrichtung, insbesondere ein LCD-, OLED- oder ein anderes Display. die Anzeigeeinrichtung ist z.B. am oberen Ende des Gehäuses angeordnet, insbesondere an der Oberseite eines Gehäusekopfes. Insbesondere eine am oberen Ende des Gehäuses angeordnete Anzeigeeinrichtung kann zusätzlich der Anzeige von Dosiervolumina, Kolbengeschwindigkeiten etc. dienen.

Gemäß einer besonders einfachen und effektiven Ausgestaltung umfaßt die elektro-optische Einrichtung mindestens eine elektrische Lichtquelle. Gemäß einer weiteren elektrischen Ausgestaltung ist die elektrische Lichtquelle mindestens eine LED.

Die Informationseinrichtung kann auf verschiedene Weise in oder am Gehäuse angeordnet sein. Gemäß einer Ausgestaltung umfaßt die Informationseinrichtung in Längsrichtung des Gehäuseschaftes hintereinander angeordnete elektrische Lichtquellen. Die in Längsrichtung hintereinander angeordneten elektrischen Lichtquellen ermöglichen eine sinnfällige Information darüber, ob bei der nächsten sinnvollen Verlängerung des Verdrängerelementes die Verdrängereinrichtung eine Flüssigkeitsabgabe oder eine Flüssigkeitsaufnahme bewirkt. Hierzu wird z.B. bei Flüssigkeitsabgabe die der Pipettenspitze oder Spritze nächstgelegene Lichtquelle eingeschaltet oder die Lichtquellen werden aufeinanderfolgend so eingeschaltet, dass das Licht auf die Pipettenspitze oder Spritze zuwandert. Durch Einschalten der elektrischen Lichtquellen in umgekehrter Richtung wird die Aufnahme von Flüssigkeit durch die Pipettenspitze oder Spritze veranschaulicht.

Gemäß einer Ausgestaltung ist die elektro-optische Einrichtung pfeilförmig und in Längsrichtung des Gehäuses gerichtet. Eine pfeilförmige Lichtquelle wird z.B. durch eine oder mehrere LED ausgeführt, die im Gehäuse unterhalb eines pfeilförmigen Fensters untergebracht sind.

Gemäß einer weiteren Ausgestaltung sind zwei pfeilförmige elektro-optische Einrichtungen voneinander weggerichtet, um die Aufnahme und Abgabe von Flüssigkeit zu veranschaulichen.

Gemäß einer weiteren Ausgestaltung ist die elektrische Informationseinrichtung am unteren Ende des Gehäuses angeordnet. Insbesondere bei einer elektro-optischen Informationsquelle ermöglicht dies eine sehr gute Wahrnehmbarkeit durch den Anwender, der bei Dosiervorgängen die Abgabestelle der Pipettenspitze oder Spritze betrachtet und damit das untere Ende des Gehäuses im Blickfeld hat.

Gemäß einer Ausgestaltung ist eine elektrische Anzeigeeinrichtung mit einer von außen betrachtbaren Anzeigeoberfläche vorhanden. Die elektrische Anzeigeeinrichtung dient z.B. der Anzeige von Dosiervolumina, Kolbengeschwindigkeiten etc. Zusätzlich kann sie als elektrische Informationseinrichtung genutzt werden, wie oben erläutert.

Gemäß einer Ausgestaltung ist die elektrische Informationseinrichtung an der Außenseite des Gehäuses angeordnet, an der die elektrische Bedieneinrichtung und/oder die elektrische Anzeigeeinrichtung angeordnet ist. Die Bedieneinrichtung und/oder die Anzeigeeinrichtung befinden sich somit vorteilhaft auf der Seite des Gehäuses, die der Anwender beim Dosieren betrachtet. Gemäß einer weiteren Ausgestaltung weist die Dosiervorrichtung am oberen Ende eines länglichen Gehäuseschaftes einen abgewinkelten Gehäusekopf auf und hat die elektrische Bedieneinrichtung und/oder die elektrische Anzeigeeinrichtung am Gehäusekopf.

Bevorzugt befindet sich die elektrische Informationseinrichtung am unteren Ende des Gehäuseschafts.

Die elektrische Bedieneinrichtung umfaßt die elektrische Modustaste, die elektrische Parametertaste und die elektrischen Steuertasten. Der Wechsel zwischen den Menüs wird mittels der elektrischen Modustaste und der elektrischen Parametertaste gesteuert. Die Navigation in den Menüs und das Einstellen von Parametern geschieht mit Hilfe der elektrischen Steuertasten. Mit dem Begriff "Navigation" ist die Bewegung von Menüpunkt zu

Menüpunkt angesprochen, die z.B. durch einen auf den Menüpunkt weisenden Zeiger oder durch Hervorhebung des Menüpunktes angezeigt wird. Die elektrischen Steuertasten werden auch zur Steuerung der Bewegung des Verdrängerelements verwendet. Dabei wird durch Betätigung der einen Steuertaste das Navigieren in den Menüs, das Einstellen von Parametern und die Verlagerung des Verdrängerelements in der einen Richtung und durch Betätigen der anderen Steuertaste das Navigieren in den Menüs, das Einstellen von Parametern und die Verlagerung des Verdrängerelements in der anderen Richtung gesteuert. Mit Hilfe der Anzeigeeinrichtung kann der Anwender die Menüs betrachten. Ggfs. kann er den aktuellen Betriebszustand der Dosiervorrichtung erkennen, z.B. eine gewählte Betriebsart und eingestellte Parameter.

Die Dosiervorrichtung weist eine geringe Anzahl Bedienelemente auf. Aufgrund der Kombination von wenigen Bedienelementen mit einer Anzeigeeinrichtung wird eine intuitive und selbsterklärende Bedienung durch den Anwender erreicht. Dadurch, dass die Betätigung der einen Steuertaste die Aufnahme und die Betätigung der anderen Steuertaste die Abgabe von Flüssigkeit steuert, kann der Anwender zu jedem Zeitpunkt die Richtung der Bewegung des Verdrängerelements wechseln. Hierdurch wird z.B. das Aufnehmen von Überständen, das Stoppen der Aufnahme und Fortsetzen der Aufnahme, die Gelbeladung, das Stoppen der Abgabe und Fortsetzen der Abgabe, das Wiederholen des Überblashubes zum Ausblasen von restlichen Flüssigkeitsmengen etc. ermöglicht bzw. erleichtert.

Gemäß einer Ausgestaltung steuert die Steuereinrichtung die Anzeige von eine bestimmte Betriebsart der Dosiervorrichtung betreffenden Untermenüs und eines mehrere Betriebsarten umfassenden Hauptmenüs durch die Anzeigeeinrichtung entsprechend der Betätigung der Modustaste und der Parametertaste. Die Untermenüs betreffen z.B. ein oder mehrere der Betriebsarten Pipettieren, Dispensieren, manuelles Pipettieren, Kalibrieren, Set-up, Titrieren, automatisches Dispensieren, Gel-Loading, Pipettieren und Mischen. Das Hauptmenü zeigt sämtliche Betriebsarten an und ermöglicht eine Auswahl. Der Anwender kann somit mit Hilfe des Hauptmenüs eine Betriebsart der Dosiervorrichtung auswählen.

Gemäß einer Ausgestaltung steuert die Steuereinrichtung bei Betätigung der Modustaste den Wechsel von einem eine bestimmte Betriebsart der Dosiervorrichtung betreffenden Untermenü in ein mehrere Betriebsarten der Dosiervorrichtung betreffendes Hauptmenü und/oder den Wechsel von dem vorgenannten Hauptmenü in ein eine bestimmte Betriebsart der Dosiervorrichtung betreffendes Untermenü mit auswählbaren Menüpunkten und/oder den Wechsel von dem vorgenannten Untermenü in ein dieselbe Betriebsart betreffendes Untermenü, in dem ein Parameter eines ausgewählten Menüpunktes einstellbar ist und/oder den Wechsel von dem vorgenannten Untermenü unter Übernahme eines eingestellten Parameters in das dieselbe Betriebsart der Dosiervorrichtung betreffende Untermenü mit auswählbaren Menüpunkten.

Somit ist es durch Betätigen der Modustaste möglich, aus einem Untermenü für eine bestimmte Betriebsart in ein Hauptmenü zu gelangen, das mehrere Betriebsarten betrifft, insbesondere sämtliche Betriebsarten, in denen die Dosiervorrichtung arbeiten kann. In dem Hauptmenü kann der Anwender eine Betriebsart auswählen. Ferner kann durch Betätigen der Modustaste vom Hauptmenü in ein Untermenü für eine bestimmte Betriebsart gewechselt werden, in dem einzelne Menüpunkte auswählbar sind. Des weiteren kann durch Betätigen der Modustaste ein Wechsel zu einem Menü vollzogen werden, in dem Parameter ausgewählter Menüpunkte einstellbar sind. Schließlich ist es möglich, durch Betätigen der Modustaste einen eingestellten Parameter zu bestätigen bzw. zu übernehmen und in das Untermenü zurück zu gelangen, in dem Menüpunkte auswählbar sind, um weitere Parameter einzustellen.

Gemäß einer Ausgestaltung steuert die Steuereinrichtung bei Betätigung der Parametertaste den Wechsel von einem eine bestimmte Betriebsart der Dosiervorrichtung betreffenden Untermenü auf ein dieselbe Betriebsart betreffendes Untermenü mit auswählbaren Menüpunkten und/oder das Starten von Dosiervorgängen in der Betriebsart des vorgenannten Untermenüs und/oder das Starten von Dosiervorgängen in einer bestimmten Betriebsart, die einem ausgewählten Menüpunkt aus dem Hauptmenü entspricht. Durch Betätigen der Parametertaste ist es somit möglich, von einem eine bestimmte Betriebsart betreffenden Untermenü ausgehend Menüpunkte auszuwählen und/oder Dosiervorgänge zu starten. Ferner können direkt nach Auswahl von Betriebsarten im Hauptmenü die betreffenden Betriebsarten durch Drücken der Parametertaste gestartet werden.

Gemäß einer Ausgestaltung steuert die Steuereinrichtung bei Betätigung der Steuertasten im Hauptmenü die Bewegung eines Zeigers zu verschiedenen Menüpunkten und/oder in einem eine bestimmte Betriebsart betreffenden Untermenü mit auswählbaren Menüpunkten die Bewegung des Zeigers zu verschiedenen Menüpunkten und/oder in einem Untermenü, in dem der Parameter eines ausgewählten Menüpunktes einstellbar ist, die Einstellung des Parameters und/oder nach dem Start eines Dosiervorganges die Bewegung des Verdrängerelementes. Hierdurch wird auf einfache Weise das Navigieren in den Menüs und Steuern der Verlagerung der Verdrängereinrichtung gesteuert. Der Zeiger erscheint in der Anzeige der Anzeigeeinrichtung. Dort ist er jeweils auf einen bestimmten Menüpunkt gerichtet. Er ist z.B. als Pfeil oder anderes graphisches Symbole ausgeführt. Zusätzlich oder statt eines Zeigers kann der Menüpunkt hervorgehoben werden, z.B. durch eine stark kontrastierende Darstellung, eine Darstellung in anderer Farbe, Unterstreichung etc.

Die Steuertasten sind z.B. von einem Paar nebeneinander angeordneter Tasten gebildet, die unabhängig voneinander betätigbar sind. Die gleichzeitige Betätigung zweier Steuertasten kann z.B. von der Steuereinrichtung als Fehlbetätigung gewertet werden, die ohne Folgen bleibt. Gemäß einer Ausgestaltung sind die Steuertasten von einer Wipptaste in der einen oder anderen Richtung betätigbar, so daß Fehlbetätigungen ausgeschlossen werden können. Ferner ist mittels der Wipptaste in besonders sinnfälliger Weise ein Navigieren in den Menüs, Einstellen von Parametern und Verlagern des Verdrängerelements in Auf- und Abwärtsrichtung steuerbar.

Besonders anwenderfreundlich ist eine Ausgestaltung, bei der die Steuereinrichtung die Anzeige der jeweiligen Funktion der Modustaste und der Parametertaste mittels der Anzeigeeinrichtung steuert. Bei dieser Ausgestaltung zeigt die Anzeigeeinrichtung beispielsweise an, wenn durch Betätigen der Modustaste das Auswählen eines Untermenüs und durch Bestätigen der Parametertaste das Starten eines Dosiervorganges in einer bestimmten Betriebsart möglich ist.

Grundsätzlich ist es möglich, dass die Steuereinrichtung nach Betätigung einer Steuertaste die Verlagerung des Verdrängerelements der Verdrängereinrichtung so lange steuert, bis die Auslösung der Verlagerung durch die Betätigung einer anderen Taste gestoppt wird. Gemäß einer besonders bedienerfreundlichen Ausgestaltung steuert die Steuereinrichtung die Verlagerung des Verdrängerelements der Verdrängungseinrichtung so lange, wie der Druck auf eine der Steuertasten anhält und stoppt die Verlagerung des Verdrängerelements so lange, wie die Steuertasten entlastet sind.

Gemäß einer Ausgestaltung hat eine Steuertaste einen zweiten Schaltpunkt und steuert die Steuereinrichtung bei Betätigung der Steuertaste bis zum Erreichen des zweiten Schaltpunktes die Verlagerung des Verdrängerelements der Verdrängereinrichtung so, dass das Verdrängerelement einen Überblashub ausführt. Hierdurch wird dem Anwender die gezielte Ausführung des Überblashubes erleichtert.

Gemäß einer Ausgestaltung ist die Dosiervorrichtung eine Ein- oder Mehrkanaldosiervorrichtung. Eine Einkanaldosiervorrichtung arbeitet mit einer einzigen Pipettenspitze oder Spritze zusammen. Eine Mehrkanaldosiervorrichtung arbeitet mit mehreren Pipettenspitzen oder Spritzen zusammen. Mehrkanaldosiervorrichtungen können eine einzige Verdrängereinrichtung aufweisen, die mit mehreren Pipettenspitzen kommunizierend verbindbar ist. Sie können aber auch mehrere Verdrängereinrichtungen aufweisen, wobei jede Verdrängereinrichtung mit einer Pipettenspitze kommuniziert.

Gemäß einer anwenderfreundlichen Ausgestaltung weist die Dosiervorrichtung in einem Gehäusekopf des Gehäuses eine Anzeigeeinrichtung und unterhalb der Anzeigeeinrichtung die Modustaste, die Parametertaste und das Paar Steuertasten auf. Diese Anordnung ermöglicht eine gute Wahrnehmbarkeit der Anzeigeeinrichtung durch den Anwender und eine einfache Betätigung der Bedieneinrichtungen.

Gemäß einer Ausgestaltung weist die Dosiervorrichtung einen länglichen Gehäuseschaft und einen demgegenüber abgewinkelten Gehäusekopf auf. Eine Anordnung der Anzeigeeinrichtung und der Bedieneinrichtungen an der oberen Seite des Gehäusekopfes ist für den Anwender besonders vorteilhaft.

Gemäß einer besonders anwenderfreundlichen Ausgestaltung sind die Modustaste und die Parametertaste nebeneinander und/oder die Steuertasten übereinander angeordnet. Gemäß einer weiteren Ausgestaltung ist mindestens eine Steuertaste zwischen der Modustaste und der Parametertaste angeordnet. Gemäß einer weiteren Ausgestaltung ist eine Abwerfertaste unterhalb der Steuertasten angeordnet. Die vorerwähnten Ausgestaltungen erleichtern das Bedienen der Bedienelemente mittels einer Hand bzw. des Daumens einer Hand, da sich sämtliche vorerwähnten Bedienelemente in der Reichweite des Daumens der Hand befindet, die einen Gehäuseschaft der Dosiervorrichtung hält. Hierzu sind bevorzugt die Bedienelemente im Verbindungsbereich zwischen einem Gehäusekopf und dem Gehäuseschaft angeordnet.

Gemäß einer weiteren Ausgestaltung weist die Steuertaste, die am nächsten an der Halteeinrichtung angeordnet ist, den zweiten Schaltpunkt für die Auslösung des Überblashubes auf. Diese Steuertaste weist somit sinnfällig in die Richtung, in der der Überblashub ausgeführt wird.

Die Erfindung wird nachfolgend anhand der anliegenden Zeichnungen eines Ausführungsbeispiels näher erläutert. In den Zeichnungen zeigen:
- Fig. 1: eine elektronische Dosiervorrichtung in einem perspektivischen Röntgenbild schräg von vom und von der Seite;
- Fig. 2: dieselbe Dosiervorrichtung in einer Ansicht von der Seite;
- Fig. 3: dieselbe Dosiervorrichtung in derselben Perspektivansicht wie in Fig. 1, jedoch ohne Darstellung innenliegender Komponenten;
- Fig. 4: die Anzeigeeinrichtung der Dosiervorrichtung in verschiedenen Betriebssituationen in schematischer Draufsicht;
- Fig. 5: eine Anzeigeeinrichtung in schematischer Draufsicht.

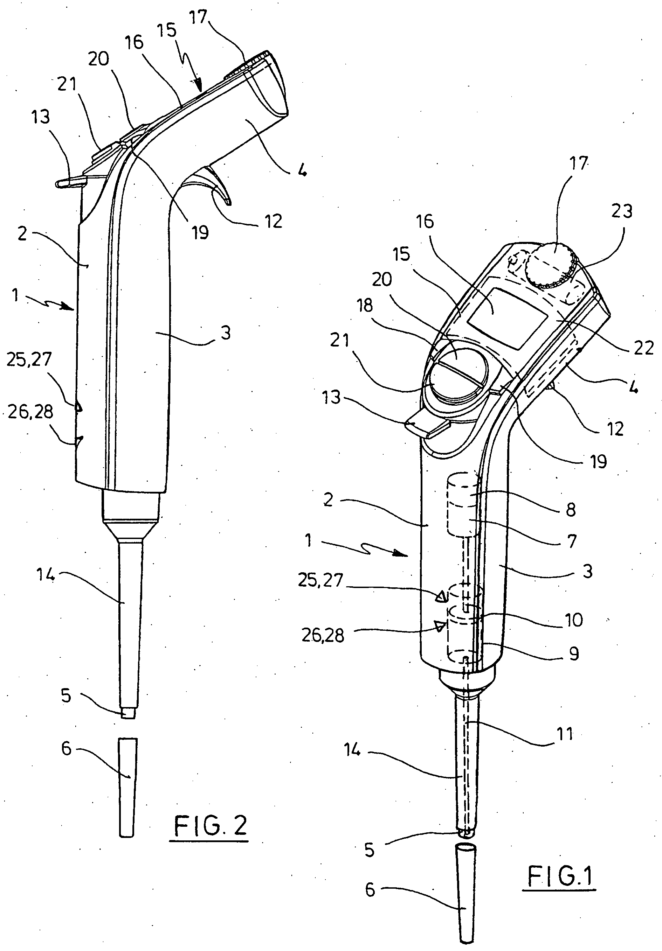

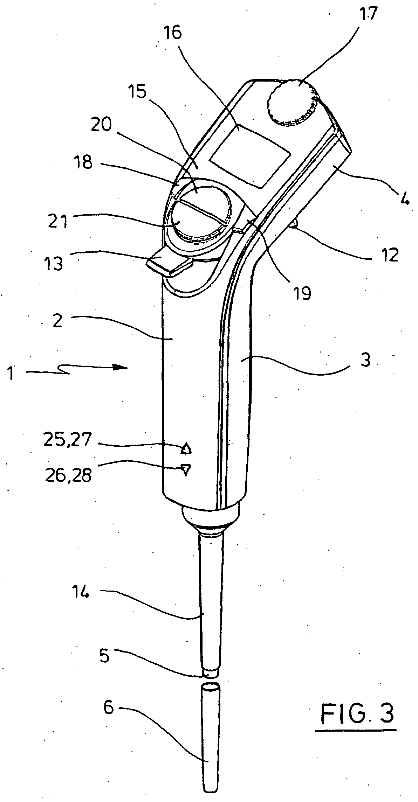

Gemäß Fig. 1 bis 3 hat eine Dosiervorrichtung 1 als Handgriff ausgeführtes Gehäuse 2 mit einem länglichen Gehäuseschaft 3 und einen um etwa 45° abgewinkelten Gehäusekopf 4 am oberen Ende. Das Gehäuse 2 hat am unteren Ende einen Konus 5 zum Aufstecken einer Pipettenspitze 6.

Im Gehäuseschaft 3 ist ein Antrieb 7 mit einem Elektromotor 8 angeordnet. Ferner befindet sich dort ein Zylinder 9 mit einem darin längs verschieblich angeordneten Kolben 10, der mit dem Antrieb 7 mechanisch verbunden ist. Der Zylinder ist über einen Verbindungskanal 11 mit einer Öffnung am Ende des Konus 5 verbunden.

Der Gehäusekopf 4 hat an der Unterseite einen nach unten gekrümmten Haken 12, der das sichere Halten der Dosiervorrichtung 1 am Gehäuseschaft 3 erleichtert.

Am oberen Ende des Gehäuseschaftes 3 ist eine Abwerfertaste 13 angeordnet, die mechanisch mit einer Abwerferhülse 14 verbunden ist, so daß durch Betätigen der Abwerfertaste 13 eine Pipettenspitze 6 vom Konus 5 abdrückbar ist.

Auf der Oberseite 15 bzw. Vorderseite des Gehäusekopfes 4 befindet sich eine Anzeigeeinrichtung 16 bzw. ein Display, die z.B. als LCD-Anzeige ausgeführt ist. Oberhalb der Anzeigeeinrichtung 16 kann ein Einstellknopf 17 zum schnellen Einstellen der Betriebsart vorhanden sein.

Unterhalb der Anzeigeeinrichtung 16 sind nebeneinander eine Modustaste 18 und eine Parametertaste 19 angeordnet. Dazwischen befinden sich übereinander zwei Steuertasten 20, 21, wobei die obere Steuertaste 20 eine Aufwärtsbewegung und die untere Steuertaste 21 eine Abwärtsbewegung und einen Überblashub steuert.

Die Steuertaste 20 hat nur einen einzigen Schaltpunkt. Die Steuertaste 21 weist zwei Schaltpunkte auf, wobei das Erreichen des ersten Schaltpunktes die Abwärtsbewegung und das Erreichen des zweiten Schaltpunktes einen Überblashub des Kolbens 10 auslöst.

Im Gehäusekopf 4 ist auf einer Platine eine elektrische Steuereinrichtung 22 angeordnet, die mit dem Elektromotor 8, der Anzeigeeinrichtung 16, dem Einstellknopf 17 und den Tasten 18 bis 21 verbunden ist. Die elektrische Steuereinrichtung 22 umfaßt bevorzugt eine elektrische Datenverarbeitungseinrichtung, z.B. einen Mikrocontroller.

Ferner ist im Gehäusekopf 4 eine elektrische Spannungsversorgung 23 vorhanden, die beispielsweise von mehreren Akkus gebildet ist, die mittels eines externen Ladegeräts aufladbar sind. Die elektrische Spannungsversorgung 23 versorgt die elektrischen Bauelemente der Dosiervorrichtung 1 mit Strom.

Die elektronische Dosiervorrichtung 1 ist aus einem Standby-Modus, in den sie nach einer bestimmten Ruhezeit fällt, durch Betätigen einer beliebigen Taste 18 bis 21 in den normalen Betriebszustand versetzbar. Zusätzlich oder statt dessen kann ein nicht gezeigter Ein-/Ausschalter zum Einschalten des normalen Betriebszustandes bzw. Ausschalten vorhanden sein.

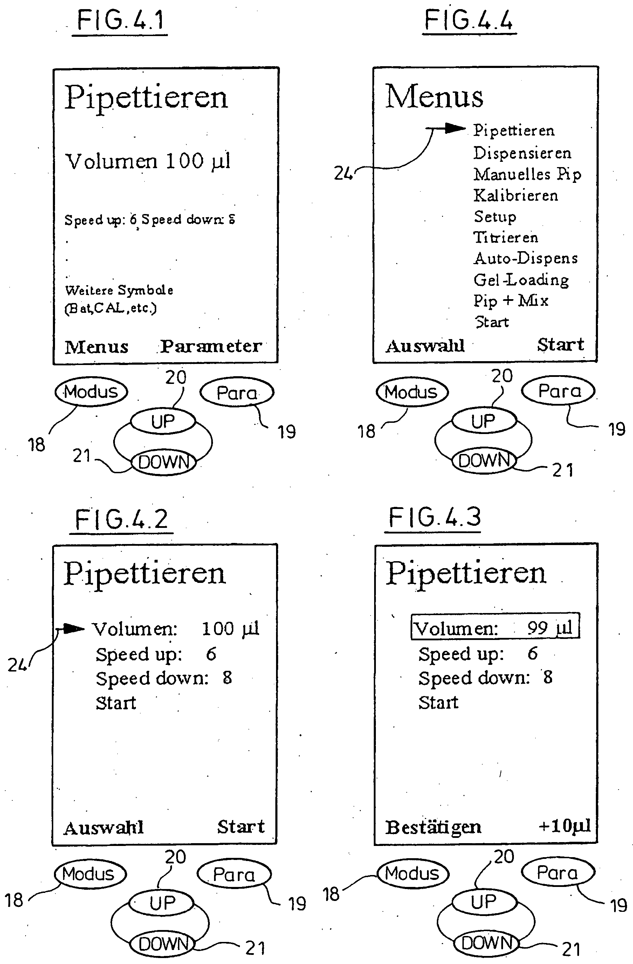

Nach dem Einschalten zeigt die Anzeigeeinrichtung ein Untermenü mit der zuletzt eingestellten Betriebsart und dem zuletzt eingestellten Parameter dieser Betriebsart an. In Fig. 4.1 ist dies für den Fall gezeigt, dass zuletzt die Betriebsart "Pipettieren" eingestellt war.

Nach Betätigen der Parametertaste 19 ist es möglich, Parameter dieser Betriebsart zu ändern. Die Anzeige nach Betätigung der Parametertaste 19 ist in Fig. 4.2 gezeigt. In dieser Anzeige ist ein Zeiger 24 vorhanden, der mittels der Steuertasten 20, 21 nach oben und nach unten verstellbar ist.

Der Parameter, auf den der Zeiger 24 in Fig. 4.2 weist, ist nach Betätigung der Modustaste 18 änderbar. Die Änderung des Parameters erfolgt durch Betätigung der Steuertasten 20, 21, wie in Fig. 4.3 gezeigt. Die Änderung dieses Parameters wird die Betätigen der Modustaste 18 bestätigt.

Danach ist gemäß Fig. 4.2 der Zeiger 24 mittels der Steuertasten 20, 21 auf einen weiteren Parameter einstellbar, um diesen zu ändern.

Wenn sämtliche einstellbaren Parameter die gewünschten Werte aufweisen, wird das Pipettieren durch Betätigen der Parametertaste 19 gestartet.

Die Bewegung des Kolbens 10 nach unten und nach oben wird durch Betätigung der Steuertasten 20, 21 gesteuert.

Nach Beendigung des Pipettiervorgangs wird das Untermenü für den eingestellten Dosierbetrieb mit den aktuellen Parametern angezeigt, wie in Fig. 4.1 dargestellt.

Aus diesem Zustand gelangt der Anwender durch Betätigen der Modustaste 18 in ein Hauptmenü, das in Fig. 4.4 gezeigt ist. Darin werden sämtliche Betriebsarten angezeigt.

Durch Betätigen der Steuertasten 20, 21 ist der Zeiger 24 auf eine bestimmte Betriebsart einstellbar. Durch Betätigen der Modustaste 18 wird das Menü aufgerufen, in dem die jeweilige Betriebsart mit den geltenden Parametern angezeigt wird. Von diesem Zustand ausgehend sind die Parameter einstellbar, wie dies oben für die Betriebsart "Pipettieren" beschrieben wurde. Zum Starten der jeweiligen Betriebsart wird erneut die Parametertaste 18 gedrückt.

Auch ist es möglich, aus dem Hauptmenü gemäß Fig. 4.4 durch Betätigen der Parametertaste 19 die Betriebsart direkt zu starten, auf die der Zeiger 24 weist.

Ferner hat der Anwender jederzeit die Möglichkeit, durch Betätigen des Einstellknopfes 17 eine Betriebsart schnell einzustellen. Danach erscheint sogleich das entsprechende Untermenü auf der Anzeige der Anzeigeeinrichtung 16. Im übrigen geht die Einstellung der Betriebsart über die Bedienelemente 18 bis 21 der Einstellung durch den Einstellknopf 17 vor.

In der unteren Zeile der Anzeigeeinrichtung 16 werden jeweils die aktuellen Funktionen der Modustaste 18 und der Parametertaste 19 in den jeweiligen Haupt- und Untermenüs angezeigt.

Am unteren Ende des Gehäuseschaftes 3 sind gemäß Fig. 1 bis 3 zwei LED 25, 26 angeordnet, die von Fenstern 27, 28 aus transparentem Kunststoff mit Dreiecksform überdeckt werden. Die Spitzen der Fenster 27, 28 weisen in verschiedene Richtungen.

Die LED 25, 26 sind ebenfalls mit der elektrischen Steuereinrichtung 22 elektrisch verbunden.

Die LED 25, 26 zeigen den Betrieb der Dosiervorrichtung 1 stets die nächste sinnvolle Verlagerung des Kolbens 10 an. Falls zum Aufnehmen von Flüssigkeit eine Verlagerung des Kolbens 10 nach oben sinnvoll ist, leuchtet die LED 25 unterhalb des Fensters 27 auf. Falls Flüssigkeit abgegeben werden muß und entsprechend der Kolben 10 nach unten zu bewegen ist, leuchtet die LED 26 unterhalb des Fensters 28 auf.

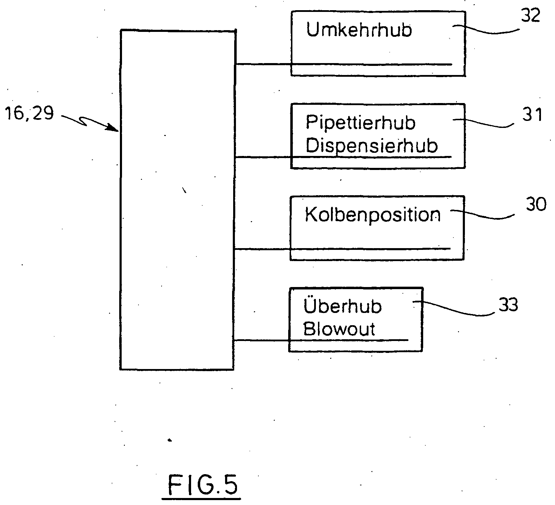

Fig. 5 zeigt die Anzeigeeinrichtung 16 der zuvor beschriebenen Dosiervorrichtung 1 oder die Anzeigeeinrichtung 29 einer anderen Dosiervorrichtung, die zusätzlich zu den oder anstatt der LED 25, 26 am unteren Ende des Gehäuseschaftes 3 eine Anzeigeeinrichtung aufweist, die eine entsprechende Anzeige ermöglicht. Am unteren Ende des Gehäuseschaftes 3 kann die Anzeigeeinrichtung 29 zusätzlich zur Anzeigeeinrichtung 16 oder statt der Anzeigeeinrichtung 16 vorhanden sein.

Die Anzeige gemäß Fig. 5 ist z.B. mittels einer LCD, OLED oder wie ein Balkendiagramm in alten Stereoanlagen verwirklicht.

Die Position des Kolbens wird durch einen Richtungspfeil 30 angezeigt. Dies kann relativ zum eingestellten Maximalvolumen (z.B. obere Grenze = 5 x 100 µl = 500 µl bei einer 1200 µl-Pipette) oder absolut zur Kolbenposition (somit bei 6 x 100 µl = 600 µl in der Mitte der Anzeige) stattfinden (Anzeigebereich 31). Es ist auch möglich, den Umkehrhub (Anzeigebereich 32) und den Überhub bzw. Blowout (Anzeigebereich 33) darzustellen (farblich, grafisch oder sonstwie abgesetzt).

## Patentansprüche

1. Elektronische Dosiervorrichtung zum Dosieren von Flüssigkeiten mit
• einem länglichen, handhabbaren Gehäuse (2),
• einem in dem Gehäuse (2) angeordneten Antrieb (7) mit einem Elektromotor (8),
• mindestens einer in dem Gehäuse (2) angeordneten oder an diesem anordenbaren Verdrängereinrichtung (9, 10) mit einem Verdrängerelement (10), das mit dem Antrieb (7) verbunden und/oder verbindbar ist,
• mindestens einer Halteeinrichtung (5) am unteren Ende des Gehäuses (2) zum Halten einer Pipettenspitze (6) oder einer Spritze,
• mindestens einer elektrischen Bedieneinrichtung (18 bis 21) in oder an dem Gehäuse (2),
• mindestens einer elektrischen Informationseinrichtung (25, 26) in oder an dem Gehäuse (2),
• einer in dem Gehäuse (2) angeordneten elektrischen Steuereinrichtung (22), die mit dem Elektromotor (8), der elektrischen Bedieneinrichtung (18 bis 21) und der elektrischen Informationseinrichtung (25, 26) verbunden ist und die in Abhängigkeit von der Lage und/oder vorangegangenen Änderungen der Lage des Verdrängerelements (10) die Informationseinrichtung (25, 26) zwecks Ausgabe einer Information über die nächste sinnvolle Verlagerung (10) steuert,
• einer elektrischen Spannungsversorgung (23),
• einer elektrischen Modustaste (18) und einer elektrischen Parametertaste (19) zum Wechseln zwischen verschiedenen Menüs,
• einem Paar nebeneinander angeordneter elektrischer Steuertasten (20, 21) zum Navigieren in den Menüs, Einstellen von Parametern und Steuern der Verlagerung des Verdrängerelementes (10), wobei die beiden Steuertasten (20, 21) das Navigieren in den Menüs, das Einstellen von Parametern und die Verlagerung des Verdrängerelementes (10) in verschiedenen Richtungen steuern,
• einer elektrischen Anzeigeeinrichtung (16) zum Anzeigen von Menüs und Parametern,
• wobei die elektrische Steuereinrichtung (22) mit der elektrischen Modustaste (18), der elektrischen Parametertaste (19), den elektrischen Steuertasten (20, 21) und der elektrischen Anzeigeeinrichtung (16) verbunden ist und die Anzeige von Menüs und Parametern durch die Anzeigeeinrichtung (16) sowie die Verlagerung des Verdrängerelements (10) entsprechend der Betätigung der Modustaste (18), der Parametertaste (19) und der Steuertasten (20, 21) steuert.

2. Dosiervorrichtung nach Anspruch 1, bei der die Verdrängereinrichtung (9, 10) einen Zylinder (9) mit einem darin längs verschieblich angeordneten Kolben (10) umfaßt.

3. Dosiervorrichtung nach Anspruch 1 oder 2 mit einer Pipettenspitze (6) oder einer Spritze.

4. Dosiervorrichtung nach einem der Ansprüche 1 bis 3, bei der die Informationseinrichtung (25, 26) mindestens eine elektro-optische Einheit umfaßt.

5. Dosiervorrichtung nach Anspruch 4, bei der die Informationseinrichtung (25, 26) mindestens eine elektrische Lichtquelle umfaßt.

6. Dosiervorrichtung nach Anspruch 5, bei der die Informationseinrichtung (25, 26) in Längsrichtung des Gehäuseschafts (3) hintereinander angeordnete elektrische Lichtquellen umfaßt.

7. Dosiervorrichtung nach einem der Ansprüche 4 bis 6, bei der die elektro-optische Einrichtung (25, 26) pfeilförmig ist und in Längsrichtung des Gehäuses (2) weist.

8. Dosiervorrichtung nach Anspruch 7, bei der zwei pfeilförmige elektro-optische Einrichtungen (25, 26) voneinander weg gerichtet sind.

9. Dosiervorrichtung nach einem der Ansprüche 1 bis 8, bei der die elektrische Informationseinrichtung (25, 26) am unteren Ende des Gehäuses (2) angeordnet ist.

10. Dosiervorrichtung nach einem der Ansprüche 1 bis 9, die eine elektro-optische Anzeigeeinrichtung (16) mit einer von außen betrachtbaren Anzeigeoberfläche aufweist.

11. Dosiervorrichtung nach Anspruch 10, bei der die Informationseinrichtung die Anzeigeeinrichtung ist.

12. Dosiervorrichtung nach einem der Ansprüche 1 bis 11, bei der die elektrische Informationseinrichtung (25, 26) an der Außenseite des Gehäuses (2) angeordnet ist, an der die elektrische Bedieneinrichtung (18 bis 21) und/oder die elektrische Anzeigeeinrichtung (16) angeordnet ist.

13. Dosiervorrichtung nach einem der Ansprüche 1 bis 12, die am oberen Ende eines länglichen Gehäuseschaftes (3) einen abgewinkelten Gehäusekopf (4) aufweist und die elektrische Bedieneinrichtung (18 bis 21) und/oder die elektrische Anzeigeeinrichtung (16) am Gehäusekopf (4) hat.

14. Dosiervorrichtung nach einem der Ansprüche 1 bis 13, bei der die Steuereinrichtung (22) die Anzeige von einer bestimmten Betriebsart der Dosiervorrichtung betreffenden Untermenüs und eines mehrere Betriebsarten umfassenden Hauptmenüs durch die Anzeigeeinrichtung (16) entsprechend der Betätigung der Modustaste (18) und der Parametertaste (19) steuert.

15. Dosiervorrichtung nach einem der Ansprüche 1 bis 14, bei der die Steuereinrichtung (22) bei Betätigung der Modustaste (18) den Wechsel von einem eine bestimmte Betriebsart der Dosiervorrichtung betreffenden Untermenü in ein mehrere Betriebsarten der Dosiervorrichtung betreffendes Hauptmenü und/oder den Wechsel von dem vorgenannten Hauptmenü in ein eine bestimmte Betriebsart der Dosiervorrichtung betreffendes Untermenü mit auswählbaren Menüpunkten und/oder den Wechsel von dem vorgenannten Untermenü in ein dieselbe Betriebsart betreffendes Untermenü, in dem der Parameter eines ausgewählten Menüpunktes einstellbar ist, und/oder den Wechsel von dem vorgenannten Untermenü unter Übernahme eines eingestellten Parameters in das dieselbe Betriebsart betreffende Untermenü mit auswählbaren Menüpunkten steuert.

16. Dosiervorrichtung nach einem der Ansprüche 1 bis 15, bei der die Steuereinrichtung (22) bei Betätigung der Parametertaste (19) den Wechsel von einem eine bestimmte Betriebsart der Dosiervorrichtung betreffenden Untermenü auf ein dieselbe Betriebsart betreffendes Untermenü mit auswählbaren Menüpunkten und/oder das Starten von Dosiervorgängen in der Betriebsart des vorgenannten Untermenüs und/oder das Starten von Dosiervorgängen in einer Betriebsart, die einem ausgewählten Menüpunkt aus dem Hauptmenü entspricht, steuert.

17. Dosiervorrichtung nach einem der Ansprüche 1 bis 16, bei der die Steuereinrichtung (22) bei Betätigung der Steuertasten (20, 21) im Hauptmenü die Bewegung eines Zeigers (24) zu verschiedenen Menüpunkten und/oder in einem eine bestimmte Betriebsart betreffenden Untermenü mit auswählbaren Menüpunkten die Bewegung des Zeigers zu verschiedenen Menüpunkten und/oder in einem Untermenü, in dem der Parameter eines ausgewählten Menüpunktes einstellbar ist, die Einstellung des Parameters und/oder nach dem Start eines Dosiervorganges die Bewegung des Verdrängerelements (9) steuert.

18. Dosiervorrichtung nach einem der Ansprüche 1 bis 17, bei der die Steuertasten (20, 21) als Wipptaste ausgeführt sind.

19. Dosiervorrichtung nach einem der Ansprüche 1 bis 18, bei der die Steuereinrichtung (22) die Anzeige der jeweiligen Funktion der Modustaste (18) und/oder der Parametertaste (19) und/oder der Steuertasten (20, 21) mittels der Anzeigeeinrichtung (16) steuert.

20. Dosiervorrichtung nach einem der Ansprüche 1 bis 19, bei der die Steuereinrichtung (22) die Verlagerung des Verdrängerelements (9) der Verdrängereinrichtung (9, 10) so lange steuert, wie der Druck auf eine der Steuertasten (20, 21) anhält und die Verlagerung des Verdrängerelements (9) so lange stoppt, wie die Steuertasten (20, 21) entlastet sind.

21. Dosiervorrichtung nach einem der Ansprüche 1 bis 20, bei der eine der beiden elektrischen Steuertasten (21) einen zweiten Schaltpunkt aufweist, wobei die elektrische Steuereinrichtung (22) bei Erreichen des zweiten Schaltpunktes die Ausführung eines Überblashubes durch das Verdrängerelement (10) steuert.

22. Dosiervorrichtung nach einem der Ansprüche 1 bis 21, die eine Ein- oder Mehrkanaldosiervorrichtung ist.

23. Dosiervorrichtung nach einem der Ansprüche 1 bis 22, die in einem Gehäusekopf (4) des Gehäuses (3) eine Anzeigeeinrichtung (16) und unterhalb der Anzeigeeinrichtung (16) die elektrische Modustaste (18) und/oder die elektrische Parametertaste (19) und/oder die elektrischen Steuertasten (20, 21) aufweist.

24. Dosiervorrichtung nach einem der Ansprüche 1 bis 23, bei der die Modustaste (18) und die Parametertaste (19) nebeneinander und/oder die Steuertasten (20, 21) übereinander angeordnet sind.

25. Dosiervorrichtung nach einem der Ansprüche 1 bis 24, bei der mindestens eine Steuertaste (20, 21) zwischen der Modustaste (18) und der Parametertaste (19) angeordnet ist.

26. Dosiervorrichtung nach einem der Ansprüche 1 bis 25, bei dem eine Abwerfertaste (13) unterhalb der Modustaste (18) und/oder der Parametertaste (19) und/oder der Steuertasten (20, 21) angeordnet ist.

27. Dosiervorrichtung nach einem der Ansprüche 1 bis 26, bei der die Modustaste (18), die Parametertaste (19) und die Steuertasten (20, 21) an der Oberseite eines Verbindungsbereichs zwischen dem länglichen Gehäuseschaft (3) und dem demgegenüber abgewinkelten Gehäusekopf (4) angeordnet sind.

28. Dosiervorrichtung nach Anspruch 27, bei der die Abwerfertaste (13) im Verbindungsbereich zwischen dem Gehäuseschaft (3) und dem Gehäusekopf (4) angeordnet ist.

## Claims

1. An electronic metering apparatus for metering liquids, with
• a longitudinal, handleable housing (2),
• a drive (7), arranged in the housing (2), with an electric motor (8),
• at least one displacer device (9, 10), arranged in the housing (2) or being capable to be arranged on the same, with a displacer element (10), which is connected to the drive (7) and/or connectable to the same,
• at least one holding device (5) on the bottom end of the housing (2) for holding a pipette point (6) or a syringe,
• at least one electric operational control (18 to 21) in or on the housing (2),
• at least one electric information device (25, 26) in or on the housing (2),
• an electric control unit (22) arranged in the housing (2), which is connected to the electric motor (8), the electric operational control (18 to 21) and the electric information device (25, 26), and which controls the information device (25, 26) depending on the position and/or previous changes of the position of the displacer element (10), in order to put out an information concerning the next reasonable dislocation of the displacer element (10), and
• an electric power supply (23),
• an electric mode key (18) and an electric parameter key (19) for changeover between different menus,
• a pair of electric control keys (20, 21), arranged next to each other, for navigation in the menus, setting of parameters and controlling the dislocation of the displacer element (10), wherein the two control keys (20, 21) control the navigation in the menus, the setting of parameters and the dislocation of the displacer element (10) in different directions,
• an electric display device (16) for displaying menus and parameters,
• wherein the electric control unit (22) is connected to the electric mode key (18), the electric parameter key (19), the electric control keys (20, 21) and the electric display device (16), and controls the display of menus and parameters by the display device (16) as well as the dislocation of the displacer element (10) corresponding to the actuation of the mode key (18), the parameter key (19) and the control keys (20, 21).

2. A metering apparatus according to claim 1, wherein the displacer device (9, 10) comprises a cylinder (9) with a plunger (10) arranged to be movable alongside therein.

3. A metering apparatus according to claim 1 or 2 with a pipette point (6) or a syringe.

4. A metering apparatus according to any one of claims 1 to 3, wherein the information device (25, 26) comprises at least one electric-optic unit.

5. A metering apparatus according to claim 4, wherein the information device (25, 26) comprises at least one electric light source.

6. A metering apparatus according to claim 5, wherein the information device (25, 26) comprises electric light sources arranged consecutively one after the other in the longitudinal direction of the housing shaft (3).

7. A metering apparatus according to any one of claims 4 to 6, wherein the electric-optic device (25, 26) is arrow-shaped and points into the longitudinal direction of the housing (2).

8. A metering apparatus according to claim 7, wherein two arrow-shaped electric-optic devices (25, 26) are directed away from each other.

9. A metering apparatus according to any one of claims 1 to 8, wherein the electric information device (25, 26) is arranged at the bottom end of the housing (2).

10. A metering apparatus according to any one of claims 1 to 9, which has an electric-optic display device (16) with a display surface observable from the outside.

11. A metering apparatus according to claim 10, wherein the information device is the display device.

12. A metering apparatus according to any one of claims 1 to 11, wherein the electric information device (25, 26) is arranged on the outer side of the housing (2) on which the electric operational control (18 to 21) and/or the electric display device (16) is/are arranged.

13. A metering apparatus according to any one of claims 1 to 12, which has an angled housing head (4) on the upper end of a longitudinal housing shaft (3) and which has the electric operational control (18 to 21) and/or the electric display device (16) on the housing head (4).

14. A metering apparatus according to any one of claims 1 to 13, wherein the control unit (22) controls the indication by the display device (16) of submenus concerning certain modes of operation of the mitering apparatus and of a main menu, comprising plural modes of operation, corresponding to the actuation of the mode key (18) and the parameter key (19).

15. A metering apparatus according to any one of claims 1 to 14, wherein upon actuation of the mode key (18), the control unit (22) controls the changeover from a submenu concerning one certain mode of operation of the metering apparatus into a main menu concerning plural modes of operation of the metering apparatus and/or the changeover from the aforementioned main menu into a submenu concerning a certain mode of operation of the metering apparatus with selectable menu items and/or the changeover from the aforesaid submenu into a submenu concerning the same mode of operation, in which the parameter of a selected menu item can be set, and/or the changeover with transfer of a set parameter from the aforesaid submenu into the submenu concerning the same mode of operation with selectable menu items.

16. A metering apparatus according to any one of claims 1 to 15, wherein upon actuation of the parameter key (19), the control unit (22) controls the changeover from a submenu concerning one certain mode of operation of the metering apparatus into a submenu concerning the same mode of operation with selectable menu items and/or the start of mitering processes in the mode of operation of the aforesaid submenu and/or the start of mitering processes in a mode of operation which corresponds to a selected menu item of the main menu.

17. A metering apparatus according to any one of claims 1 to 16, wherein upon actuation of the control keys (20, 21), the control unit (22) controls the movement of a pointer (24) to different menu items in the main menu, and/or the movement of the pointer to different menu items in a submenu concerning a certain mode of operation with selectable menu items, and/or the adjustment of the parameter in a submenu in which the parameter of a selected menu item is settable, and/or the movement of the displacer element (9) after the start of a metering process.

18. A metering apparatus according to any one of claims 1 to 17, wherein the control keys (20, 21) are realised as rocker key.

19. A metering apparatus according to any one of claims 1 to 18, wherein the control unit (22) controls the display of the respective function of the mode key (18) and/or the parameter key (19) and/or the control keys (20, 21) by means of the display device (16).

20. A metering apparatus according to any one of claims 1 to 19, wherein the control unit (22) controls the dislocation of the displacer element (9) of the displacer device (9, 10) as long as the push at one of the control keys (20, 21) lasts and it stops the dislocation of the displacer element (9) as long as the control keys (20, 21) are released.

21. A metering apparatus according to any one of claims 1 to 20, wherein one of the two electric control keys (21) has a second switching point, the electric control unit (22) ordering the execution of an overblow stroke by the displacer element (10) when the second switching point is reached.

22. A metering apparatus according to any one of claims 1 to 21, which is a single or multi channel metering apparatus.

23. A metering apparatus according to any one of claims 1 to 22, which has a display device (16) in a housing head (4) of the housing (3) and the electric mode key (18) and/or the electric parameter key (19) and/or the electric control keys (20, 21) below the display device (16).

24. A metering apparatus according to any one of claims 1 to 23, wherein the mode key (18) and the parameter key (19) are arranged next to each other, and/or the control keys (20, 21) are arranged on top of each other.

25. A metering apparatus according to any one of claims 1 to 24, wherein at least one control key (20, 21) is arranged between the mode key (18) and the parameter key (19).

26. A metering apparatus according to any one of claims 1 to 25, wherein a discarder key (13) is arranged below the mode key (18) and/or the parameter key (19) and/or the control keys (20, 21).

27. A metering apparatus according to any one of claims 1 to 26, wherein the mode key (18), the parameter key (19) and the control keys (20, 21) are arranged on the topside of a connecting region between the longitudinal housing shaft (3) and the housing head (4) angled with respect to the same.

28. A metering apparatus according to claim 27, wherein the discarder key (13) is arranged in the connecting region between the housing shaft (3) and the housing head (4).

## Revendications

1. Dispositif de dosage électronique destiné au dosage de liquides, avec
• un boîtier (2) allongé maniable,
• un entraînement (7) disposé dans le boîtier (2), avec un moteur électrique (8),
• au moins un dispositif de déplacement (9, 10) disposé dans le boîtier (2) ou apte à être disposé sur celui-ci, avec un élément déplaceur (10) relié et/ou apte à être relié à l'entraînement (7),
• au moins un dispositif de maintien (5) à l'extrémité inférieure du boîtier (2), pour le maintien d'un embout de pipette (6) ou d'une seringue,
• au moins un dispositif de commande électrique (18 à 21) dans ou sur le boîtier (2),
• au moins un dispositif d'information électrique (25, 26) dans ou sur le boîtier (2),
• un dispositif de commande électrique (22) disposé dans le boîtier (2), lequel est relié au moteur électrique (8), au dispositif de commande électrique (18 à 21) et au dispositif d'information électrique (25, 26), et commande le dispositif d'information (25, 26) en fonction de la position et/ou des précédents changements de position de l'élément déplaceur (10), en vue de la délivrance d'une information concernant le prochain déplacement utile (10),
• une alimentation en tension électrique (23),
• une touche de mode électrique (18) et une touche de paramètres électrique (19) pour basculer entre plusieurs menus,
• une paire de touches de commande électriques (20, 21) disposées côte à côte, permettant de naviguer dans les menus, de régler des paramètres et de commander le déplacement de l'élément déplaceur (10), les deux touches de commande (20, 21) commandant la navigation dans les menus, le réglage de paramètres et le déplacement de l'élément déplaceur (10) dans différentes directions,
• un dispositif d'affichage électrique (16) pour l'affichage de menus et de paramètres,
• le dispositif de commande électrique (22) étant relié à la touche de mode électrique (18), à la touche de paramètres électrique (19), aux touches de commande électriques (20, 21) et au dispositif d'affichage électrique (16), et commandant l'affichage de menus et de paramètres par le biais du dispositif d'affichage (16), ainsi que le déplacement de l'élément déplaceur (10) en fonction de l'actionnement de la touche de mode (18), de la touche de paramètres (19) et des touches de commande (20, 21).

2. Dispositif de dosage selon la revendication 1, dans lequel le dispositif de déplacement (9, 10) comporte un cylindre (9) avec un piston (10) disposé de façon longitudinalement déplaçable dans celui-ci.

3. Dispositif de dosage selon la revendication 1 ou 2, avec un embout de pipette (6) ou une seringue.

4. Dispositif de dosage selon l'une des revendications 1 à 3, dans lequel le dispositif d'information (25, 26) comporte au moins une unité électro-optique.

5. Dispositif de dosage selon la revendication 4, dans lequel le dispositif d'information (25, 26) comporte au moins une source de lumière électrique.

6. Dispositif de dosage selon la revendication 5, dans lequel le dispositif d'information (25, 26) comporte des sources de lumière électriques disposées les unes derrière les autres dans le sens longitudinal de l'axe de boîtier (3).

7. Dispositif de dosage selon l'une des revendications 4 à 6, dans lequel le dispositif électro-optique (25, 26) est en forme de flèche dirigée dans le sens longitudinal du boîtier (2).

8. Dispositif de dosage selon la revendication 7, dans lequel deux dispositifs électro-optiques en forme de flèches (25, 26) sont détournés l'un de l'autre.

9. Dispositif de dosage selon l'une des revendications 1 à 8, dans lequel le dispositif d'information électrique (25, 26) est disposé à l'extrémité inférieure du boîtier (2).

10. Dispositif de dosage selon l'une des revendications 1 à 9, présentant un dispositif d'affichage électro-optique (16) avec une surface d'affichage visible depuis l'extérieur.

11. Dispositif de dosage selon la revendication 10, dans lequel le dispositif d'information est le dispositif d'affichage.

12. Dispositif de dosage selon l'une des revendications 1 à 11, dans lequel le dispositif d'information électrique (25, 26) est disposé du côté extérieur du boîtier (2) où est disposé le dispositif de commande électrique (18 à 21) et/ou le dispositif d'affichage électrique (16).

13. Dispositif de dosage selon l'une des revendications 1 à 12, présentant une tête de boîtier coudée (4) à l'extrémité supérieure d'un axe de boîtier allongé (3), et le dispositif de commande électrique (18 à 21) et/ou le dispositif d'affichage électrique (16) étant prévu sur la tête de boîtier (4).

14. Dispositif de dosage selon l'une des revendications 1 à 13, dans lequel le dispositif de commande (22) commande l'affichage de sous-menus correspondant à un certain mode de fonctionnement du dispositif de dosage et d'un menu principal incluant plusieurs modes de fonctionnement, par le dispositif d'affichage (16), en fonction de l'actionnement de la touche de mode (18) et de la touche de paramètres (19).

15. Dispositif de dosage selon l'une des revendications 1 à 14, dans lequel, lors de l'actionnement de la touche de mode (18), le dispositif de commande (22) commande le passage d'un sous-menu correspondant à un certain mode de fonctionnement du dispositif de dosage, à un menu principal correspondant à plusieurs modes de fonctionnement du dispositif de dosage, et/ou le passage dudit menu principal à un sous-menu correspondant à un certain mode de fonctionnement du dispositif de dosage, avec des points de menu sélectionnables, et/ou le passage dudit sous-menu à un sous-menu correspondant au même mode de fonctionnement, dans lequel le paramètre d'un point de menu sélectionné peut être réglé, et/ou le passage dudit sous-menu avec adoption d'un paramètre réglé au sous-menu correspondant au même mode de fonctionnement avec des points de menu sélectionnables.

16. Dispositif de dosage selon l'une des revendications 1 à 15, dans lequel, lors de l'actionnement de la touche de paramètres (16), le dispositif de commande (22) commande le passage d'un sous-menu correspondant à un certain mode de fonctionnement du dispositif de dosage à un sous-menu correspondant au même mode de fonctionnement avec des points de menu sélectionnables, et/ou le démarrage d'opérations de dosage dans le mode de fonctionnement dudit sous-menu, et/ou le démarrage d'opérations de dosage dans un mode de fonctionnement correspondant à un point de menu sélectionné du menu principal.

17. Dispositif de dosage selon l'une des revendications 1 à 16, dans lequel, lors de l'actionnement des touches de commande (20, 21), le dispositif de commande (22) commande le déplacement d'un pointeur (24) vers différents points de menu dans le menu principal, et/ou le déplacement du pointeur vers différents points de menu dans un sous-menu correspondant à un certain mode de fonctionnement avec des points de menu sélectionnables, et/ou le réglage du paramètre dans un sous-menu dans lequel le paramètre d'un point de menu sélectionné peut être réglé, et/ou le déplacement de l'élément déplaceur (9) après le démarrage d'une opération de dosage.

18. Dispositif de dosage selon l'une des revendications 1 à 17, dans lequel les touches de commande (20, 21) sont conçues comme une touche à bascule.

19. Dispositif de dosage selon l'une des revendications 1 à 18, dans lequel le dispositif de commande (22) commande l'affichage de la fonction respective de la touche de mode (18) et/ou de la touche de paramètres (19) et/ou des touches de commande (20, 21) à l'aide du dispositif d'affichage (16).

20. Dispositif de dosage selon l'une des revendications 1 à 19, dans lequel le dispositif de commande (22) commande le déplacement de l'élément déplaceur (9) du dispositif de déplacement (9, 10) tant que la pression sur l'une des touches de commande (20, 21) est maintenue, et arrête le déplacement de l'élément déplaceur (9) tant que les touches de commande (20, 21) sont relâchées.

21. Dispositif de dosage selon l'une des revendications 1 à 20, dans lequel l'une des deux touches de commande électriques (21) présente un deuxième point de commutation, le dispositif de commande électrique (22) commandant l'exécution d'une course de soufflage d'air par l'élément déplaceur (10) lors de l'atteinte du deuxième point de commutation.

22. Dispositif de dosage selon l'une des revendications 1 à 21, lequel est un dispositif de dosage à un ou plusieurs canaux.

23. Dispositif de dosage selon l'une des revendications 1 à 22, lequel présente un dispositif d'affichage (16) dans une tête de boîtier (4) du boîtier (3), et la touche de mode électrique (18) et/ou la touche de paramètres électrique (19) et/ou les touches de commande électriques (20, 21) étant prévues en dessous du dispositif d'affichage (16).

24. Dispositif de dosage selon l'une des revendications 1 à 23, dans lequel la touche de mode (18) et la touche de paramètres (19) sont disposées l'une à côté de l'autre et/ou dans lequel les touches de commande (20, 21) sont disposées l'une au-dessus de l'autre.

25. Dispositif de dosage selon l'une des revendications 1 à 24, dans lequel au moins une touche de commande (20, 21) est disposée entre la touche de mode (18) et la touche de paramètres (19).

26. Dispositif de dosage selon l'une des revendications 1 à 25, dans lequel une touche d'éjection (13) est disposée en dessous de la touche de mode (18) et/ou de la touche de paramètres (19) et/ou des touches de commande (20, 21).

27. Dispositif de dosage selon l'une des revendications 1 à 26, dans lequel la touche de mode (18), la touche de paramètres (19) et les touches de commande (20, 21) sont disposées sur la face supérieure d'une région d'assemblage entre l'axe de boîtier allongé (3) et la tête de boîtier (4) coudée par rapport à celui-ci.

28. Dispositif de dosage selon la revendication 27, dans lequel la touche d'éjection (13) est disposée dans la région d'assemblage, entre l'axe de boîtier (3) et la tête de boîtier (4).
